# FASCICULE DE BREVET EUROPEEN

(11) **EP 1 964 712 B1**
(45) Date de publication et mention de la délivrance du brevet: **21.10.2009**
(21) Numéro de dépôt: 08003651.0
(22) Date de dépôt: 28.02.2008
(51) Int. Cl.: B60N 2/36, B60N 2/30

(54) **Siège escamotable pour véhicule automobile**
Versenkbarer Sitz eines Kraftfahrzeugs
Retractable seat for an automobile

(30) Priorité: 02.03.2007 FR 0701545
(43) Date de publication de la demande: 03.09.2008
(73) Titulaire: GRUPO ANTOLIN-INGENIERIA, S.A., 09080 Burgos (ES)
(72) Inventeur: Duchateau, Jean, 43330 Pont Salomon (FR); Basson, Gérard, 42230 Roche La Moliere (FR)
(74) Mandataire: Delorme, Nicolas

(56) Documents cités:
- EP-A- 1 193 112
- JP-A- 2003 220 864
- US-A- 5 527 087

## Description

La présente invention concerne un siège escamotable pour véhicule automobile.

De manière classique, un siège de véhicule présente une assise sensiblement horizontale et un dossier légèrement incliné par rapport à la verticale. Suivant sa largeur, le siège peut recevoir à un, deux ou trois passagers.

Dans certains véhicules, un ou plusieurs sièges peuvent être escamotés dans le plancher du véhicule lorsqu'ils ne sont pas utilisés. A cet effet, le plancher du véhicule intègre une cave de rangement dans laquelle le siège peut venir se replier. L'escamotage du siège permet alors de libérer l'habitacle du véhicule qui voit sa capacité de chargement augmentée.

Le document JP 2003 220 864 montre toutes les caractéristiques du préambule de la revendication 1.

Dans le cas de véhicules de tourisme, les sièges escamotables se trouvent généralement au niveau du rang 2 et/ou du rang 3.

Outre le fait d'être robuste, d'une manipulation aisée et d'un confort satisfaisant, l'une des problématiques auxquelles doit faire face un siège escamotable est l'exiguïté de la cave de rangement dans laquelle le siège vient se replier.

La cave de rangement est aménagée dans le plancher du véhicule et, donc, empiète sur un espace qui est normalement dévolu à d'autres organes du véhicule. C'est pour cela qu'un siège escamotable doit s'accommoder d'une cave de rangement dont les dimensions longitudinale, transversale et verticale sont strictement limitées. La dimension verticale de la cave de rangement est particulièrement limitée ; c'est plus spécialement le cas pour les sièges de rang 3 qui surplombent les organes du train roulant arrière du véhicule.

Il apparaît donc que des améliorations sont souhaitables dans le domaine des sièges escamotables.

Un but de l'invention est de proposer un siège escamotable qui présente, en position escamotée, un encombrement réduit notamment dans une direction verticale du véhicule.

Un autre but de l'invention est de proposer un siège escamotable dont la manoeuvre est aisée.

Un autre but de l'invention est de proposer un siège escamotable qui soit robuste.

L'invention concerne un siège escamotable pouvant occuper une position déployée et une position escamotée dans une cave formée dans un plancher d'un véhicule automobile dont une paroi de fond est en dessous du niveau du plancher, ce siège comprend :
- une assise présentant une partie avant et une partie arrière reliées au plancher par un mécanisme de liaison comprenant un pied avant relié par une liaison pivot sur le plancher et par une liaison pivot sur la partie avant de l'assise,
- un dossier présentant une partie proximale adjacente, en position déployée, à la partie arrière de l'assise et une partie distale pouvant recevoir un appui tête, le dossier étant relié au plancher par un mécanisme de liaison.

Il est, de plus, prévu que la partie proximale du dossier intègre deux consoles sur lesquelles l'assise vient se connecter de manière pivotante avec un déport de l'axe de rotation Δ du dossier sur l'assise en direction de la partie avant de l'assise, et que la partie avant du siège est connectée au pied avant par des moyens de liaison déconnectables qui permettent d'assurer un soutien de l'assise en position d'utilisation et qui se déconnectent de la partie avant de l'assise lors de l'escamotage du siège et se connectent à la partie avant de l'assise lors du déploiement du siège.

Le fait de doter le dossier de deux consoles sur lesquels s'articule l'assise du siège permet de créer deux bras de levier qui vont permettre de créer un décalage entre le dossier et l'assise au cours de l'escamotage du siège. En position escamotée, l'assise est ainsi en partie décalée en arrière du dossier. Ce décalage entre le dossier et l'assise s'avère extrêmement avantageux puisqu'il permet d'éviter une superposition complète du dossier sur l'assise. Cela permet ainsi de minimiser l'encombrement du siège dans la direction verticale du véhicule, lorsque le siège est en position escamotée.

Le décalage vers l'arrière de l'assise est encore amélioré grâce à la déconnexion du pied avant. La déconnexion du pied avant lors de l'escamotage permet ainsi à l'assise de se décaler par rapport au dossier sans que le mouvement de retrait de l'assise ne soit limité par la dimension du pied avant.

Selon des dispositions concrètes, le mécanisme de liaison du dossier au plancher comprend, de chaque cote du dossier :
- une bielle arrière reliée par une liaison pivot sur le plancher en un point situé en arrière de la cave et reliée par une liaison pivot au le dossier sur sa partie proximale, et
- un bras oscillant relié par une liaison pivot sur le plancher et reliée au dossier par une liaison pivot située sur sa partie proximale à distance de la liaison pivot de la bielle arrière sur le dossier en direction de la partie distale du dossier.

De façon concrète, il est envisagé que les moyens de liaison déconnectables comprennent au moins un crochet fixé sur la partie avant du siège en forme générale de C ouvert en direction de l'avant du siège et un tube supérieur positionné à l'extrémité supérieure du pied avant, le tube transversal s'engageant dans chacun des crochets en position déployée du siège et se dégageant du siège en position escamotée du siège.

Pour créer une liaison pivot entre le pied avant et l'assise, chaque crochet peut présenter deux rampes orientées de manière convergente vers une cavité dans laquelle le tube supérieur est engagé lorsque le siège est en position déployée.

Il peut être prévu que les deux rampes de chaque crochet convergent vers la cavité centrale au niveau d'un étranglement qui obture partiellement la cavité centrale et que le tube supérieur présente un méplat pouvant être passé au travers de l'étranglement au cours de l'escamotage du siège et au cours du déploiement du siège. Cette disposition permet d'assure un verrouillage du pied avant lorsque le siège est en position déployée.

Pour éviter une déconnexion complète entre l'assise et le pied avant, le siège peut comprendre une ferrure équipée d'une pince de clipsage qui vient se fixer sur le tube supérieur du pied avant et dotée d'une lumière allongée dans laquelle est engagé un doigt embarqué sur l'assise.

Selon une possibilité, le siège peut comprendre une rampe ascendante en direction de l'avant du siège sur laquelle la partie avant de l'assise s'appuie durant l'escamotage et le déploiement du siège, pour assurer le relèvement de l'assise au cours du déploiement du siège.

De façon pratique, la rampe peut être constituée d'un fil métallique.

Pour faciliter le mouvement de l'assise, la partie avant de l'assise est pourvue d'un galet ou d'un patin susceptible de glisser sur la rampe.

Selon des dispositions concrètes, le dossier peut comporter deux flasques en forme de crosse présentant une console en direction de l'assise sur lesquelles l'assise est articulée.

Le siège peut posséder un mécanisme de verrouillage du siège en position déployée et un mécanisme de verrouillage du siège en position escamotée.

A cet effet le siège peut présenter un premier crochet mobile qui est disposé sur l'un des flasques et est susceptible de venir s'engager sur un pion fixé sur le bras oscillant en position déployée du siège de manière à autoriser ou à empêcher la rotation du dossier par rapport au bras oscillant; le siège peut également présenter un second crochet mobile qui est disposé sur l'un des flasques et est susceptible de venir s'engager sur un pion fixé sur le bras oscillant en position escamotée du siège de manière à autoriser ou à empêcher la rotation du dossier par rapport au bras oscillant.

De manière avantageuse, le premier crochet et le second crochet sont disposés sur un même flasque et s'engagent successivement en position déployée et en position escamotée sur un même pion.

L'invention vise également un ensemble comprenant au moins un siège tel que précédemment défini; l'ensemble présente un bâti sensiblement quadrangulaire comprenant des poutres transversales et des poutres longitudinales entre lesquelles au moins un siège est positionné.

Le bâti peut présenter une gouttière centrale en U sur laquelle viennent se fixer en pivot les bielles arrière, les bras oscillant et les pieds avant de deux sièges adjacents.

Pour sa bonne compréhension, l'invention est décrite en référence au dessin ci annexé représentant, à titre d'exemple non limitatif, plusieurs formes de réalisation d'un siège selon l'invention.
Figures 1 à 3 sont des schémas de principe d'un siège selon l'invention illustrant respectivement le siège en position déployée, en cours d'escamotage, et en position repliée,
Figure 4 et figure 5 montrent, en perspective, respectivement de trois quart avant et de trois quart arrière, une forme de réalisation d'un siège sur lequel les éléments de garniture ont été ôtés pour faire apparaître la structure même du siège,

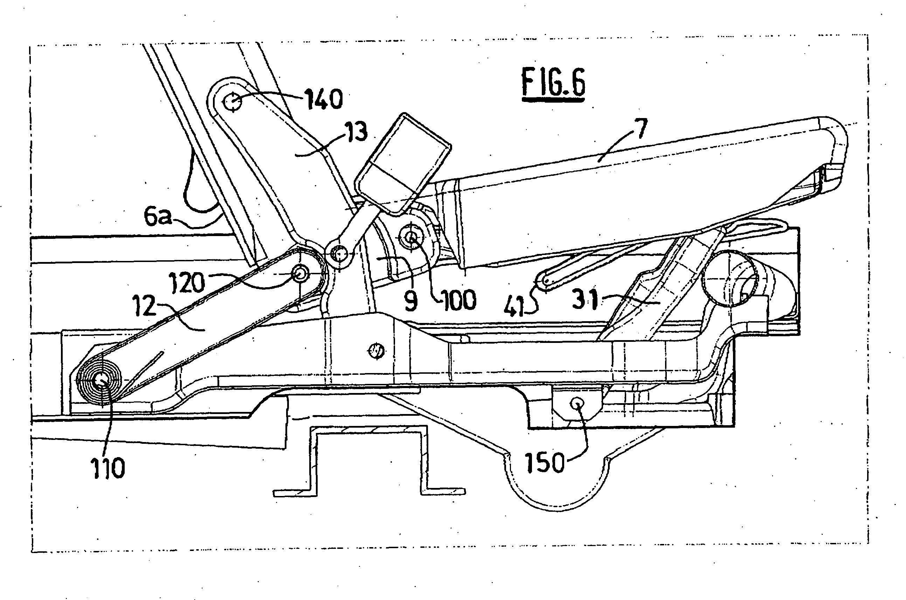

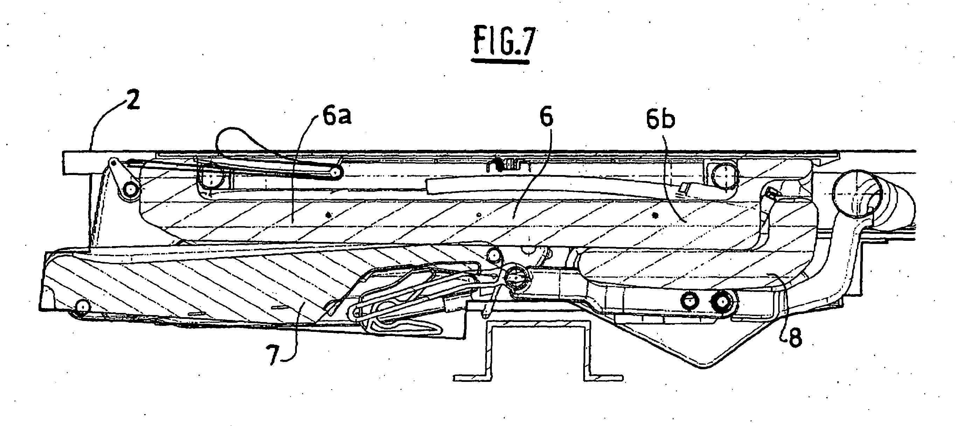

Figure 6 et figure 7 montrent, respectivement en position déployée et en position escamotée, le siège en vue de côté,

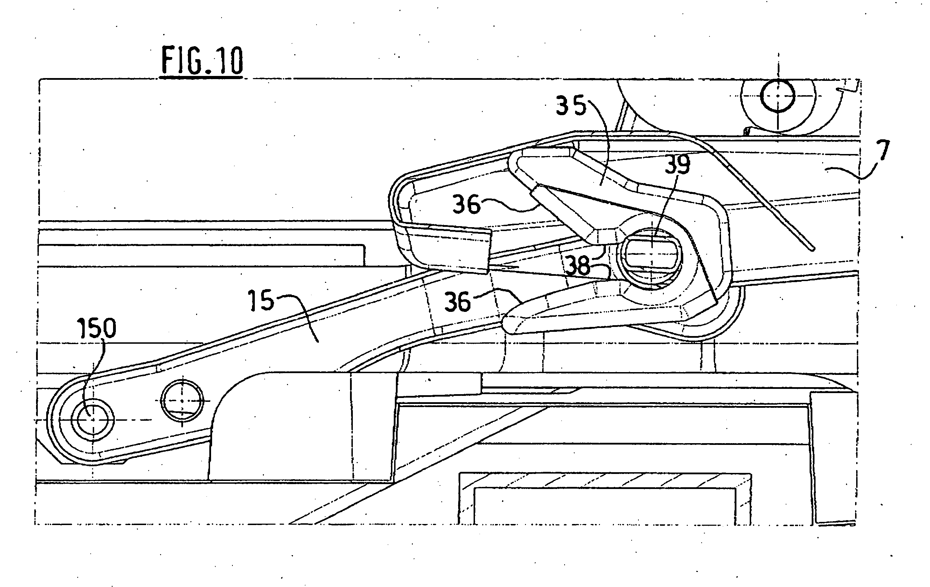

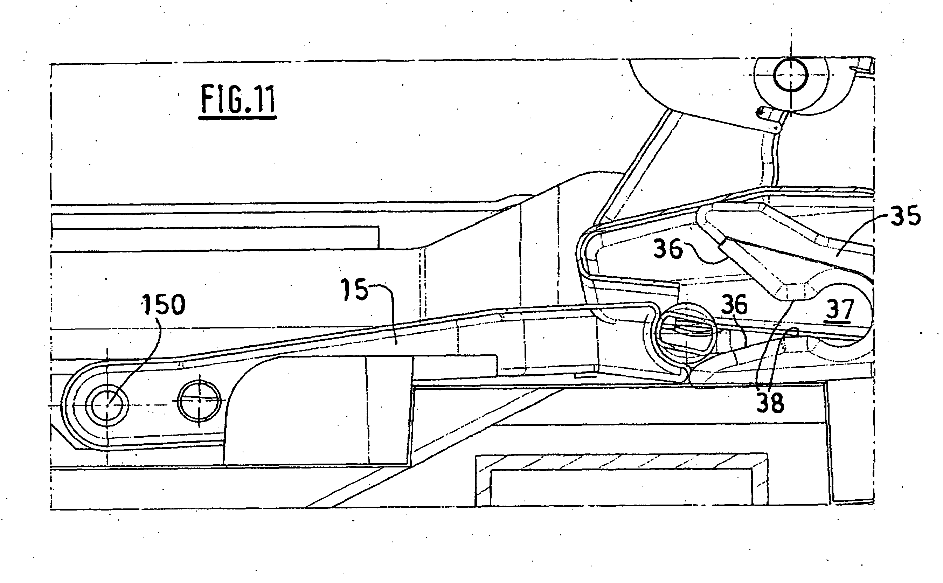

Figures 8, 9, 10, 11 montrent, en perspective et en vue de côté, la partie de pied avant du siège au cours de son escamotage,

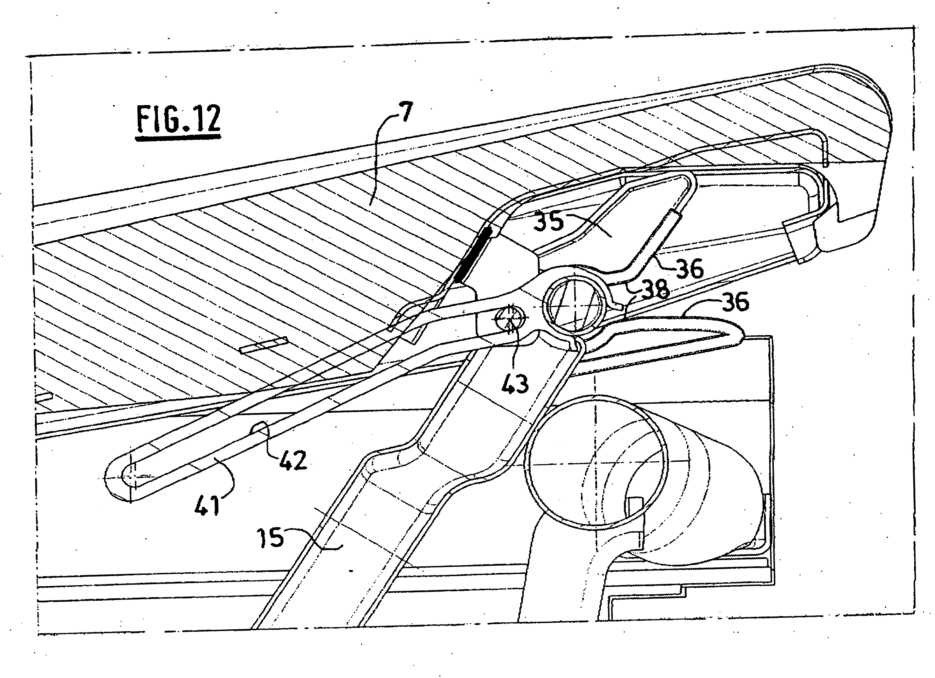

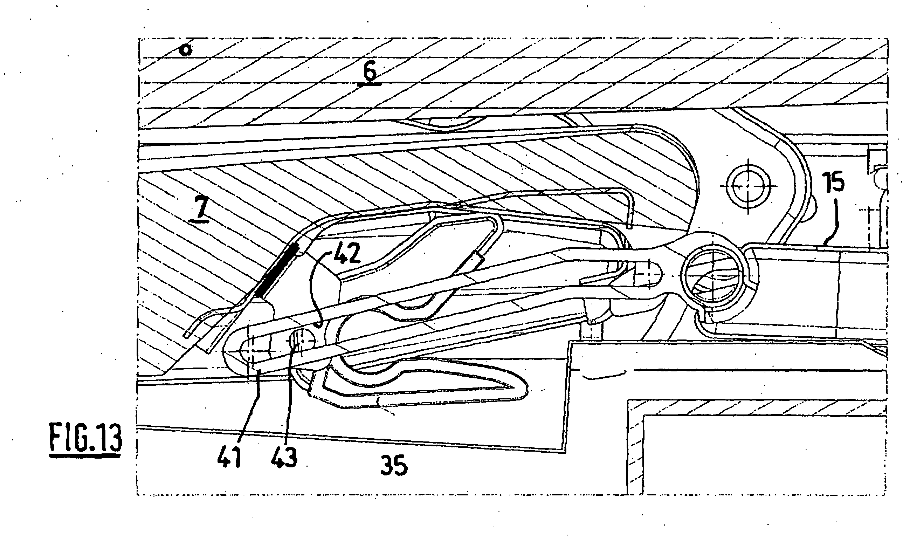

Figure 12 et figure 13 montrent une disposition fonctionnelle du pied avant du siège,
Figure 14 et figure 15 montrent deux formes de réalisation de moyens de guidage de l'assise au cours du passage du siège de sa position déployée à sa position escamotée,
Figure 16 et figure 17 montrent un mécanisme de verrouillage du siège en position déployée et en position escamotée.

Par un souci de simplification sur les différentes figures, les mêmes références désignent des éléments identiques ou similaires.

Il est également préciser que le siège, dans ses différentes formes de réalisation illustrées sur le dessin, est décrit par rapport à un référentiel XYZ lié au véhicule présentant une direction longitudinale X par rapport à laquelle sont notamment utilisés les termes « longueur », « avant », « arrière », une direction transversale Y par rapport à laquelle sont notamment utilisés les termes « largeur », « latérale » et une direction verticale Z, par rapport à laquelle sont notamment utilisés les termes « supérieur », « inférieur », « hauteur» .

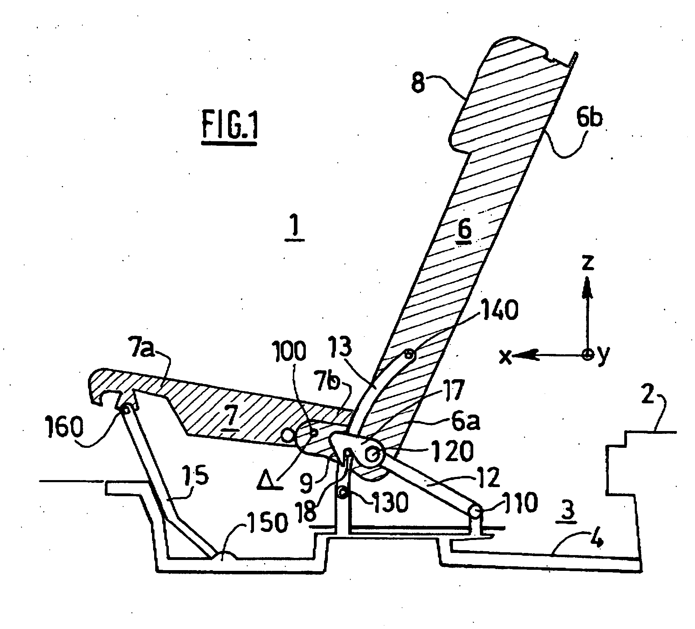

En référant tout d'abord aux schémas de principe des Figures 1, 2 et 3, on peut voir que le siège escamotable 1 peut être disposé sur une partie d'un plancher 2 d'un véhicule ; cette partie du plancher 2 du véhicule peut être, de préférence, la partie arrière du plancher de l'habitacle d'un véhicule, par exemple, de type monospace ou break.

Le siège 1, dans sa position déployée, est disposé au dessus d'une cave de rangement 3 de forme sensiblement parallélépipédique qui est insérée dans le plancher 2 du véhicule. En d'autres termes, la paroi de fond 4 de la cave de rangement 3 est située en dessous de la surface du plancher 2.

Comme on peut le voir, par exemple, sur la figure 1, le siège 1 comprend un dossier 6 articulé sur une assise 7. Le dossier 6 présente une partie proximale 6a qui est adjacente à l'assise 7 et une partie distale 6b qui constitue la partie supérieure du dossier lorsque le siège est en position déployée ; la partie distale 6b du dossier peut recevoir un appui tête 8. L'assise 7 présente un partie arrière qui est adjacente au dossier 6 et un partie avant.

En position déployée du siège, l'assise 7 est dans une position sensiblement horizontale tandis que le dossier 6 est dans une position verticale légèrement inclinée vers l'arrière de façon à permettre à un passager de venir s'asseoir de manière ergonomique sur ce siège.

La liaison entre le dossier 6 et l'assise 7 présente une disposition spécifique selon laquelle l'axe de rotation Δ du dossier 6 sur l'assise 7 est décalé de l'extrémité arrière de l'assise 7; l'axe de rotation Δ du dossier 6 sur l'assise 7 est positionné sur l'assise 7 avec un déport vers l'avant par rapport à l'extrémité arrière de l'assise.

Pour permettre le déport vers l'avant de l'assise de l'axe de rotation Δ du dossier 6 sur l'assise 7, le dossier est doté de deux consoles 9. Ces deux consoles 9 se situent de chaque coté du dossier 6, et forment chacune une importante saillie.

L'assise 7 peut venir se fixer sur les deux consoles 6 par deux axes ou tourillons qui dépassent latéralement de l'assise 7 pour s'engager dans des ouvertures pratiquées dans les consoles 9 et forment une liaison pivot 100.

Contrairement à un siège conventionnel dans lequel le dossier et l'assise sont en rotation au niveau de leur intersection, le siège 1 selon l'invention prévoit de déporter l'axe de rotation Δ entre le dossier 6 et l'assise 7 en direction de la partie avant de l'assise. L'axe de rotation Δ du dossier et de l'assise crée ainsi une ligne de séparation virtuelle entre une zone antérieure 7a de l'assise et une zone postérieure 7b de l'assise.

Comme cela apparaît sur les figures, le dossier 6 sur lequel est articulée l'assise 7 est relié au véhicule ; en l'occurrence, le dossier peut être relié à la paroi 4 de fond de la cave.

La liaison entre le dossier 6 et le véhicule est réalisée par des moyens de liaisons qui comprennent, de chaque coté du dossier, une bielle arrière 12 et un bras oscillant 13.

Chaque bielle arrière 12 est fixée, d'une part, au véhicule par une liaison pivot 110 située en arrière du siège et, d'autre part, au dossier par une liaison pivot 120 située à l'extrémité inférieure de la partie proximale 6a du dossier 6.

Chaque bras oscillant 12 est fixé, d'une part, au véhicule par une liaison pivot 130 située en dessous du siège et, d'autre part, au dossier par une liaison pivot 140 située dans la zone proximale du dossier ; la liaison pivot 140 par laquelle le bras oscillant 13 est relié sur le dossier 6 se situe à distance, en direction de la partie distale 6b du dossier 6, de la liaison pivot 120 qui assure la liaison entre le pied arrière 12 et le dossier 6. En d'autres termes, sur le dossier, la liaison pivot 140 de chacun des bras oscillants 13 est située au dessus de la liaison pivot 120 de chacun des pieds arrière 12 lorsque le siège 1 est en position déployée.

Dans la position déployée du siège, chaque bielle arrière 12 est orientée selon une direction qui est sensiblement perpendiculaire à la direction de chaque bras oscillant 13, ces derniers étant dans le prolongement du dossier 6.

L'assise 7 est, comme cela a été indiqué plus haut, solidaire du dossier 6 du coté de sa partie arrière par l'intermédiaire des deux consoles 9. Au niveau de sa partie avant, l'assise 7 est soutenue par un pied avant 15 pivotant pour la maintenir dans une position sensiblement horizontale lorsque le siège 1 est en position déployée. De façon similaire aux dispositions concernant les bras oscillants 13 et des bielles arrière 12, le pied avant 15 est doté à chacune de ses extrémités d'une liaison pivot; une liaison pivot 150 assure la fixation du pied avant sur le véhicule et une seconde liaison pivot 160 assure la fixation du pied avant 15 sur la partie avant de l'assise.

Le siège 1 peut être pourvu d'un mécanisme de verrouillage qui assure le maintien du siège dans sa position déployée. Le mécanisme de verrouillage peut comprendre un crochet 17 pivotant porté, par exemple, par l'une des bielles arrière 12. Le crochet 17 pivotant peut dans une position de verrouillage s'engager sur un pion 18 porté, par exemple, sur l'un des bras oscillants 13.

Les liaisons pivot 100, 110, 120, 130, 140, 150, 160 peuvent être de type axe ou tourillon tournant dans un palier qui assure une rotation comme unique degré de liberté ; en d'autres termes, les bielles arrière 12, les bras oscillants 13 et le pied avant 15 ne peuvent connaître qu'un mouvement en arc de cercle centré sur leur point de pivot lié à la structure du véhicule.

Le fonctionnement du siège est le suivant.

En premier lieu, un utilisateur agit sur le crochet 17 pour déverrouiller le siège.

En partant du siège dans sa position déployée tel que représenté à la Figure 1, un utilisateur qui souhaite escamoter le siège, exerce une action sur le dossier 6 pour faire pivoter celui-ci en direction de l'assise 7.

Le mouvement du dossier est contrôlé par les deux bielles arrière 12 et par les deux bras oscillants 13.

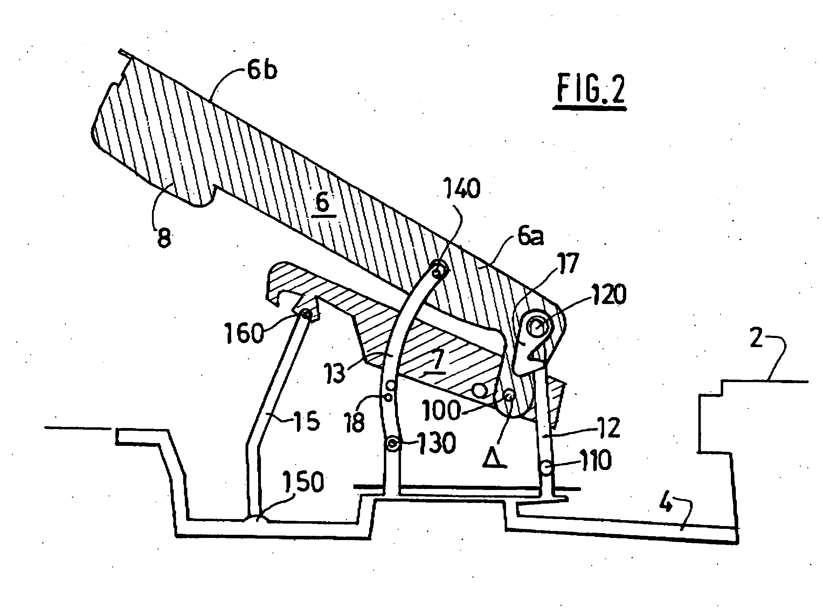

La Figure 2 montre la trajectoire du dossier qui se rabat en direction de l'assise et fait apparaître une position intermédiaire de la séquence d'escamotage dans laquelle les bielles arrière 12 se trouvent sensiblement parallèles aux bras oscillants 13. La rotation du dossier 6 est guidée par les pieds arrière 12 et les bras oscillants 13 ; l'assise 7 qui est reliée au dossier 6 est entraînée par celui-ci.

La poursuite de l'escamotage du siège 1 se fait par un déplacement sensiblement en parallélogramme des bielles arrière 12 et des bras oscillants 13 jusqu'à une position dans laquelle l'assise 7 vient se ranger contre la paroi de fond 4 de la cave de rangement 3 et le dossier 6 vient se ranger parallèlement à l'assise au dessus, de celle-ci.

Un point tout à fait distinctif du siège selon l'invention est que l'assise 7 est décalée en direction de l'arrière par rapport au dossier 6. Ainsi, la partie du dossier 6, qui intègre un appui tête 8 et qui présente un volume important n'est pas superposée à l'assise 7.

Le décalage de l'assise 7 par rapport au dossier 6 en position escamotée du siège est rendu possible par le fait que l'assise 7 est articulée sur le dossier 6 par un axe de rotation Δ qui est déporté en avant de l'assise 7. Ce déport fait que l'on observe une poussée de l'assise 7 par rapport au dossier en direction arrière du véhicule ; cette poussée de l'assise en arrière du dossier 6 est réalisée par les deux consoles 9 sur lesquelles l'assise 7 est articulée qui agissent comme des bras de levier au cours de l'escamotage du siège.

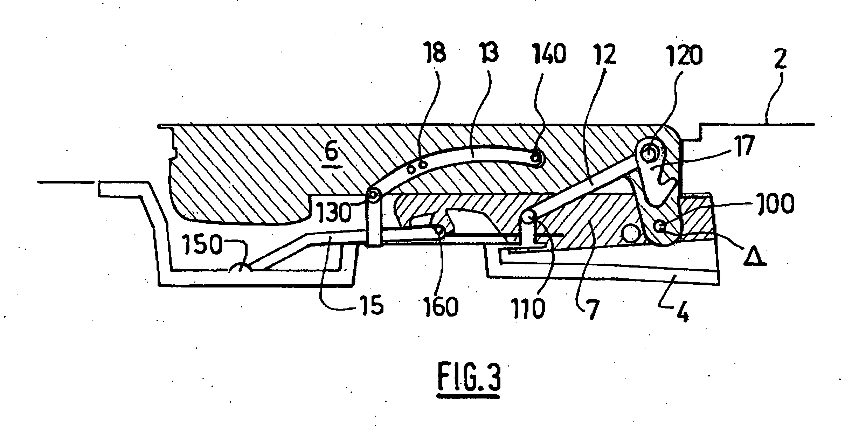

Ainsi, la zone postérieure 7b de l'assise 7 qui, en position déployée du siège, se trouve en arrière de l'axe de rotation Δ du dossier 6 par rapport à l'assise 7 dépasse en arrière du dossier 6 lorsque le siège est dans sa configuration escamotée, comme le montre la figure 3.

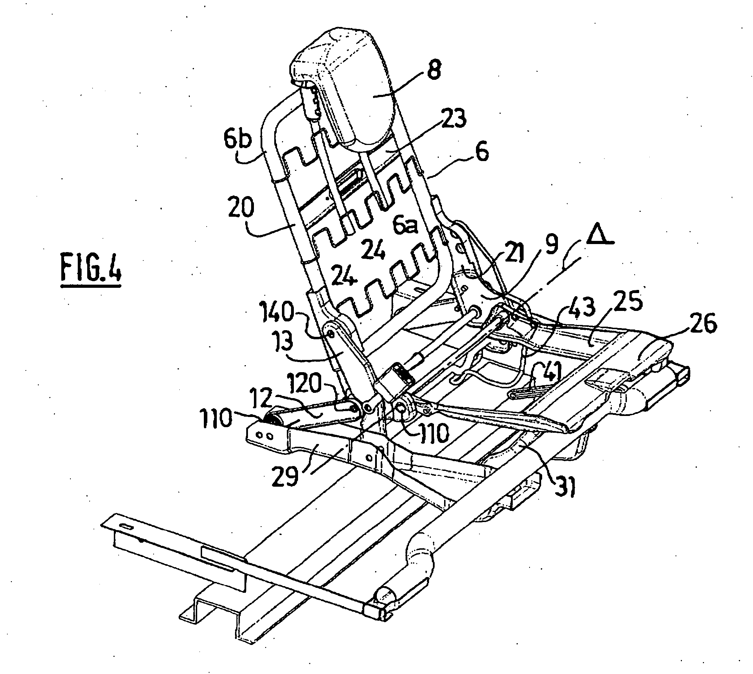

Les figures 4 et suivantes montrent une forme de réalisation du siège selon l'invention.

Le dossier 6 du siège est constitué d'une armature métallique tubulaire 20; à son extrémité distale 6 - ou supérieure en position déployée du siège - , le dossier possède un appui tête 8 dont la position est réglable. En partie proximale 6a - ou inférieure en position déployée du dossier 6 - , on note que, de part et d'autre de l'armature tubulaire 20, le dossier 6 est équipé de deux flasques 21 qui présentent chacun une forme générale de crosse.

Chacun des flasques 21 est en effet pourvu d'une partie qui est située dans le prolongement de l'armature et d'une seconde partie qui est sensiblement perpendiculaire à l'armature du dossier et forme une console.

De façon classique, le dossier peut être renforcé d'une ou de deux barres transversales 23. On note également la présence de ressorts 24 qui vont conférer de l'élasticité à une garniture qui viendra prendre place sur l'armature tubulaire.

L'assise 7 est, quant à elle, constituée de deux brancards latéraux 25 sensiblement parallèles reliés à leur extrémité avant par une plaque transversale 26 et reliés à leur extrémité arrière par un tube transversal 27.

De façon spécifique au siège selon l'invention, l'assise 7 du siège est fixée au dossier au niveau de l'extrémité de chacune des consoles 9. De manière concrète, il peut être prévu que chacune des consoles 9 du dossier 6 soit pourvue d'une ouverture circulaire dans laquelle vient s'engager un axe qui dépasse latéralement de l'assise pour former la liaison pivot 100.

En ce qui concerne la liaison de l'assise 7 et du dossier 6 sur la structure du véhicule, il est prévu les dispositions suivantes.

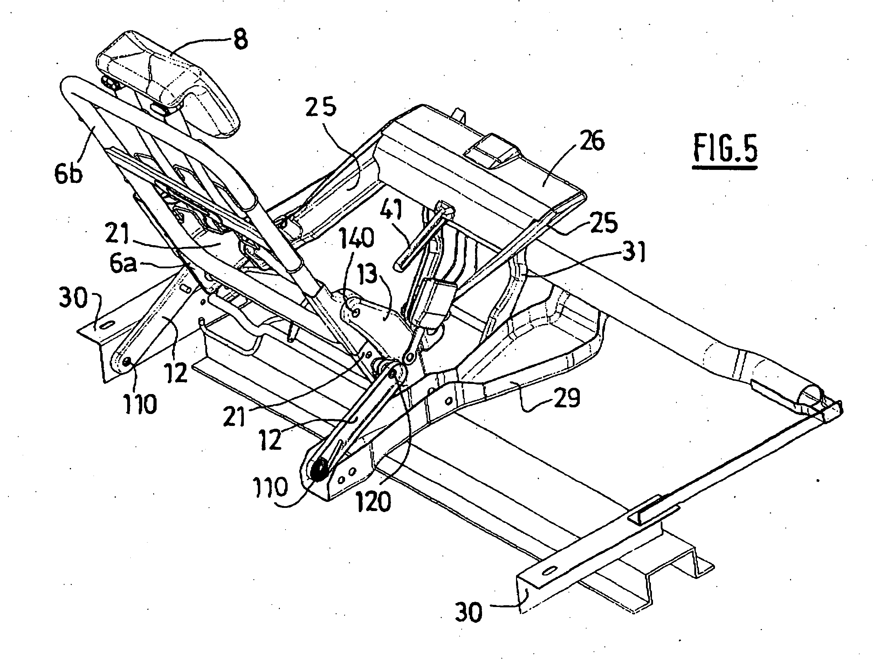

Le dossier est relié au véhicule par deux bielles arrière 12 et par deux bras oscillants 13 qui peuvent être classiquement des pièces métalliques embouties. On peut se reporter à la figure 5 pour voir la manière avec laquelle le dossier est relié au véhicule.

Comme on peut le voir sur cette figure, les bielles arrière 12 sont montées pivotantes, d'une part, sur une gouttière 29 métallique centrale ou un longeron 30 métallique qui sont fixés sur la cave d'escamotage et, d'autre part, sont fixés également de manière pivotante sur le flasque du dossier par les liaisons 120.

Le second élément de liaison du dossier est le bras oscillant 13 que l'on trouve de part et d'autre du dossier 6. Ce bras oscillant est monté pivotant à chacune de ses extrémités, d'une part, sur la gouttière centrale 29 ou un longeron latéral 30 et, d'autre part, sur le flasque 21 à un point situé à distance en direction de l'extrémité distale du dossier du point de pivot du pied arrière.

En position déployée du siège, les bras oscillants 13 sont sensiblement disposés dans le prolongement du dossier 6, tandis que la bielle arrière 12 est sensiblement perpendiculaire à la direction générale du dossier 6.

L'assise 7 est, pour sa part, maintenue, au niveau de chacun des flasques 21 du dossier pour sa partie arrière et pour sa partie avant, l'assise est soutenue par le pied avant 15. Le pied avant 15 peut se présenter sous la forme d'un élément comprenant deux ferrures latérales 31 connectées à leurs extrémités supérieure et inférieure par des tubes transversaux inférieurs 32 et supérieurs 33. La liaison du pied avant pourrait également être réalisée par deux pieds parallèles indépendants.

Le pied avant 15 est relié à son extrémité inférieure par la liaison pivot 150 sur la gouttière et sur le longeron 30 latéral et par une autre liaison pivot à la partie avant de l'assise.

Dans le siège montré aux figures 1 à 3, le décalage de l'assise 7 par rapport au dossier 6 en position escamotée du siège est absorbé un pied avant 15 qui présente une longueur particulièrement importante, de manière à décrire un arc de cercle au cours de l'escamotage du siège qui permet à la partie avant de l'assise 7 d'être constamment reliée par le pied avant 15.

Toutefois, dans certains modes de réalisation de l'invention et notamment dans le mode de réalisation montré aux figures 4 et suivantes, le retrait vers l'arrière de l'assise 7 par rapport au dossier 6 fait qu'il est prévu que le pied avant 15 puisse se déconnecter de la partie avant de l'assise 7 au cours de l'escamotage.

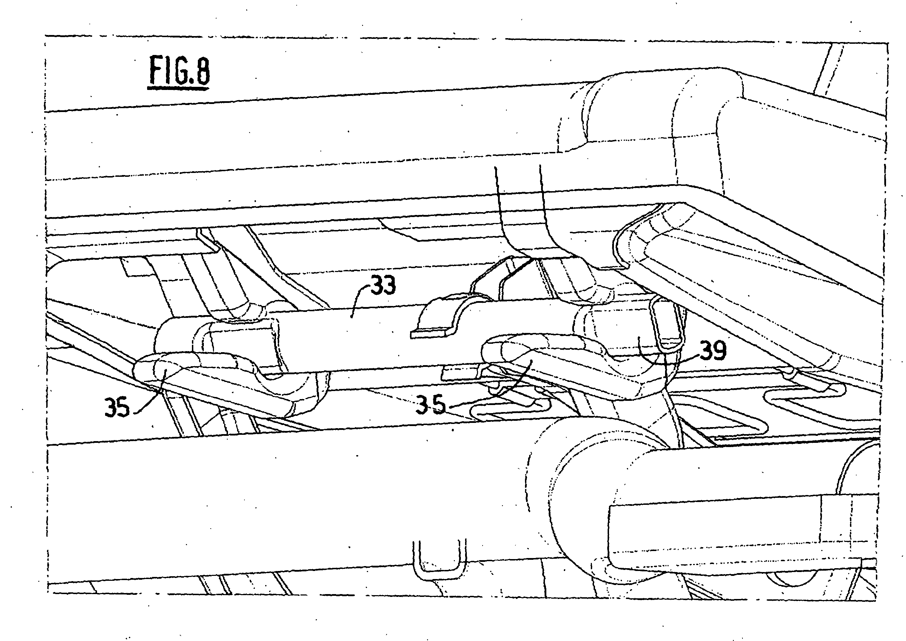

A cet effet, il est prévu, comme cela apparaît à la figure 8, que la partie avant de l'assise soit équipée de deux crochets 35 en forme générale de U tournée vers l'avant du siège. Ces deux crochets 35 sont pourvus de rampes 36 qui convergent vers une cavité centrale 37 ; un étranglement 38 est disposé entre la cavité centrale 37 et chacune des deux rampes 36.

En ce qui concerne le pied avant, il est prévu que le tube transversal supérieur 33 présente deux méplats 39 situés au droit de chacun des crochets.

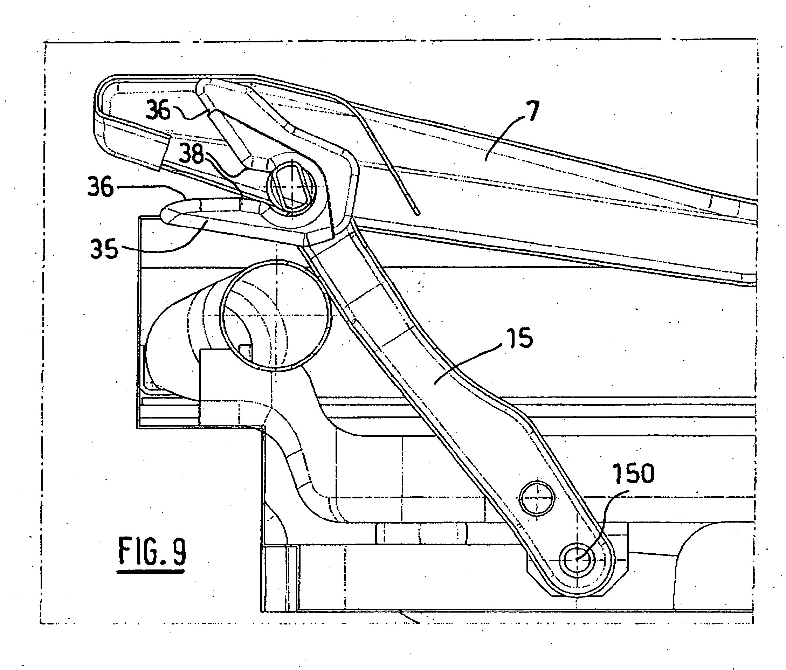

La figure 9 montre le pied avant en position déployée du siège. Lorsque l'escamotage du siège débute, l'assise 7 se déplace depuis sa position déployée vers une position intermédiaire dans laquelle l'assise se rapproche de la paroi de fond de la cave de rangement, tandis que le pied avant 15 suit une trajectoire en arc de cercle puisque le pied avant 15 est relié de manière pivotante à un point fixe du véhicule.

Au cours de la rotation du pied avant 15 et simultanément au déplacement de l'assise 7 vers la paroi de fond de la cave de rangement, il se produit une mise en coïncidence des deux méplats 39 prévus sur le tube transversal supérieur 33 du pied avant 15 avec l'étranglement 38 de chacun des crochets 35.

La mise en concordance des méplats 39 avec l'étranglement 38 des crochets 35 fait que le pied avant 15 peut se désolidariser de l'assise 7 et permettre le retrait de l'assise 7 en dessous et, pour partie, en arrière du dossier 6 dans la position escamotée du siège.

La figure 8 représente à une échelle agrandie la partie avant du siège lorsqu'il est en position escamotée ; dans cette position le tube transversal du pied avant est déconnecté de la partie avant de l'assise comme le montre cette figure.

Pour éviter une désolidarisation complète entre le pied avant 15 et l'assise 7, il peut ainsi être envisagé de doter le pied avant d'une ferrure 41 que présente une lumière allongée 42 dans laquelle peut circuler un doigt 43 qui est lui-même embarqué sur la partie avant de l'assise 7.

La ferrure 41 possède une pince de clipsage qui permet sa fixation sur le tube supérieur 33 du pied avant 15.

Combiné à la ferrure 41 ou indépendamment de celle-ci, il est par ailleurs prévu que le siège puisse être doté de moyens permettant le relèvement de l'assise 7 lors du déploiement du siège depuis sa position escamotée. Il importe en effet que l'engagement du pied avant 15 avec l'assise 7 soit réalisé de manière précise.

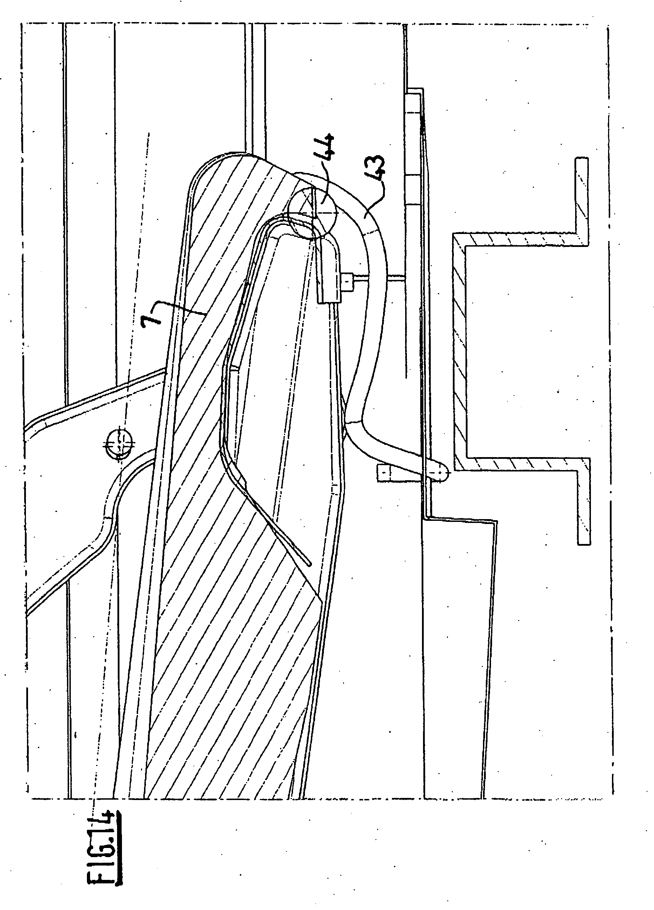

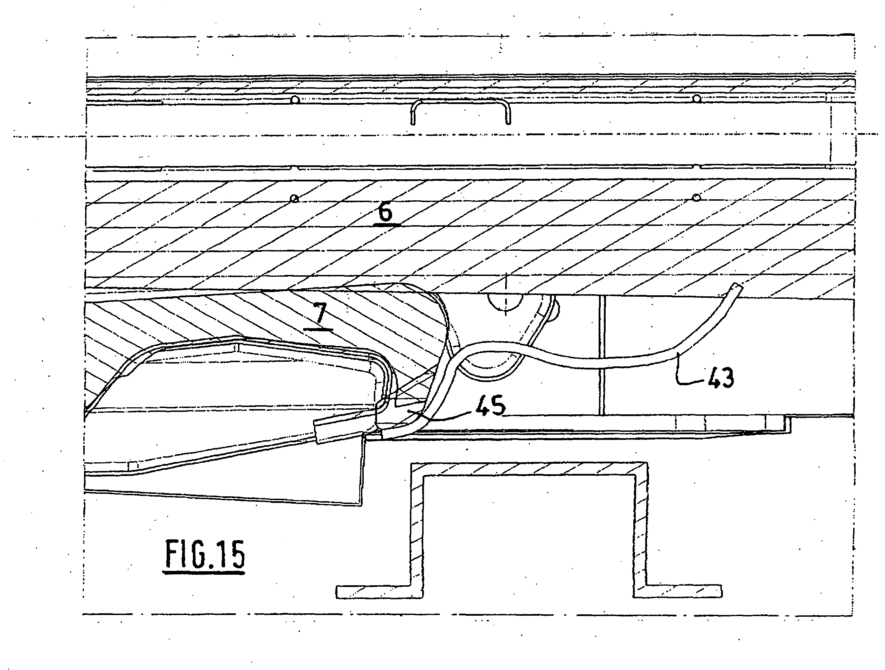

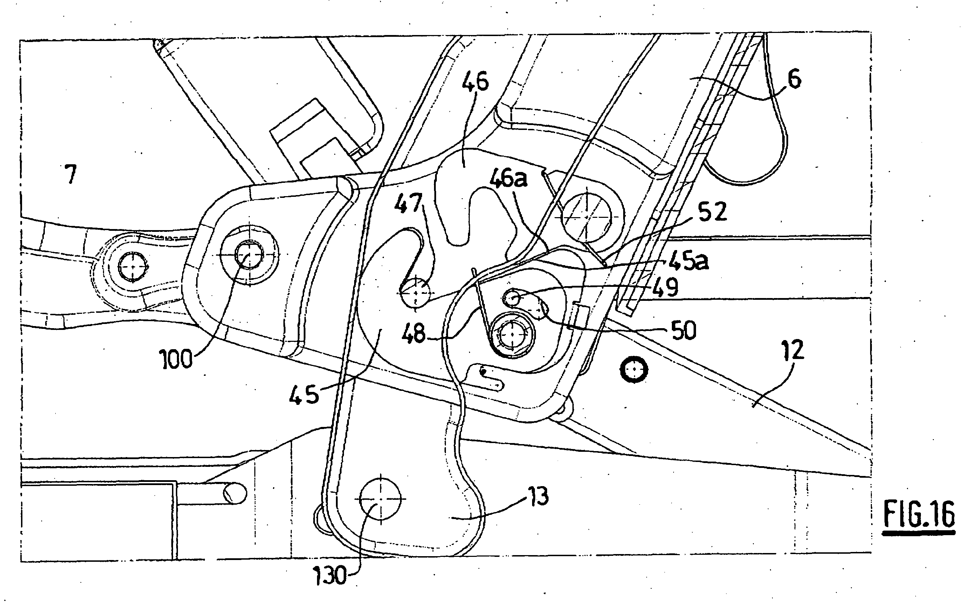

Ainsi comme le montrent les figures 14 et 16 sur lesquelles le pied avant 15 et les crochets 35 ont été masqués pour une meilleure clarté, le siège 1 peut incorporer une rampe 43 qui peut prendre la forme d'un fil métallique sur lequel s'appuie soit un galet 44, comme le montre la figure 14, soit un patin 45, comme le montre la figure 15.

La rampe 43 présente un profil ascendant en direction de l'avant du siège et permet ainsi à l'assise 7 d'être relevée au cours du déploiement du siège, de sorte que les crochets 35 viennent saisir le tube supérieur 33 du pied avant 15 formant ainsi la liaison pivot 160.

Il est précisé que, au niveau de sa liaison pivot 150 sur le véhicule, le pied avant peut être équipé d'un ressort en spirale qui est monté de façon à le solliciter vers sa position déployée.

En ce qui concerne le verrouillage du siège dans sa position déployée et dans sa position escamotée, il peut être prévu d'embarquer sur l'un des flasques 21 un crochet de verrouillage en position déployée 45 et d'un crochet en position escamotée 46.

En position déployée du siège 1, illustré par la figure 16, le crochet 45 est engagé sur un pion 47 qui est attenant au flasque 21. Un ressort épingle 48 maintient le crochet 46 engagé sur le pion 47. Il est prévu un mécanisme de tringle ou de sangle (non représenté) pour faire pivoter le crochet 46 et le dégager du pion 47. La course angulaire du crochet 45 est limitée par un doigt 49 attenant au flasque 21 qui est engagé dans une lumière en arc de cercle 50.

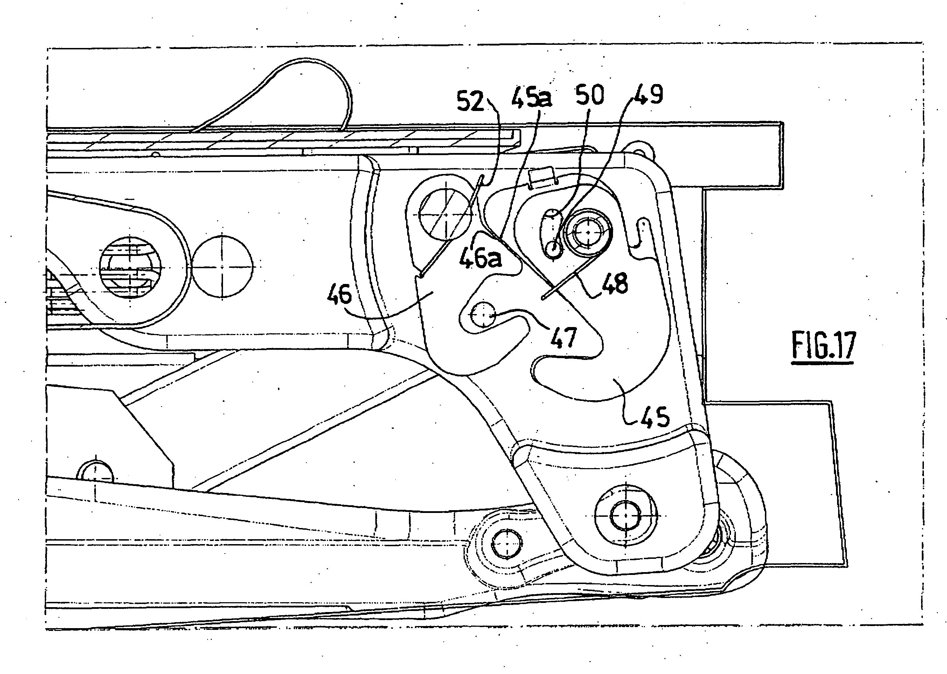

En position escamotée du siège 1 illustrée à la figure 17, le crochet 46 s'engage sur le pion 47 et verrouille le siège.

Un ressort en épingle 52 maintient l'engagement du crochet 46 sur le pion 47. Un mécanisme de sangle ou de tringle (non représenté) permet à un utilisateur de déverrouiller le crochet 45 de façon à autoriser le déploiement du siège.

Il est à noter que le crochet 45 et le crochet 46 sont en contact l'un de l'autre au niveau de la surface d'appui respectivement référencée 45a et 46a.

Ces surfaces d'appui 45a et 46a permettent lorsque l'un des crochets pivote sous l'action d'une utilisation de faire simultanément pivoter l'autre croche pour que ce dernier soit en position d'engagement sur le pion 47.

Dans un autre aspect de l'invention, il est prévu que le siège 1 peut faire partie d'un ensemble comprenant un bâti sur lequel peuvent venir se fixer un, deux ou trois sièges ; ce bâti comprend la gouttière centrale; les longerons latéraux 30 ainsi qu'un tube transversal avant. Il est ainsi prévu de fournir deux sièges montés sur l'ensemble à un constructeur qui pourra directement insérer l'ensemble dans la cave de rangement.

L'invention fournit ainsi un siège qui peut être escamoté dans une cave de rangement ayant une dimension verticale limitée en permettant un décalage entre l'assise et le dossier.

Bien entendu, l'invention n'est pas limitée à la forme de réalisation décrite ci-dessus mais elle en embrasse au contraire toutes les variantes de réalisation.

## Revendications

1. Siège escamotable pouvant occuper une position déployée et une position escamotée dans une cave formée dans un plancher (2) d'un véhicule automobile dont une paroi de fond (4) est en dessous du niveau du plancher (2), ce siège comprenant :
- une assise (7) présentant une partie avant (7a) et une partie arrière (7b) reliées au plancher par un mécanisme de liaison comprenant un pied avant (15) relié par une liaison pivot (150) sur la partie avant (7a) de l'assise,
- un dossier (6) présentant une partie proximale (6a) adjacente, en position déployée, à la partie arrière de l'assise (7) et une partie distale (6b) pouvant recevoir un appui tête ; le dossier (6) étant relié au plancher par un mécanisme de liaison,
**caractérisé en ce que** la partie proximale (6a) du dossier (6) intègre deux consoles (9) sur lesquelles l'assise (7) vient se connecter de manière pivotante avec un déport de l'axe de rotation Δ du dossier (6) sur l'assise (7) en direction de la partie avant de l'assise (7), en position déployée du siège. Et **en ce que** la partie avant de l'assise (7) est connectée au pied avant (15) par des moyens de liaison déconnectables qui permettent d'assurer un soutien de l'assise (7) en position d'utilisation et qui se déconnectent de la partie avant de l'assise (7) lors de l'escamotage du siège et se connectent à la partie avant de l'assise (7) lors du déploiement du siège.

2. Siège selon la revendication 1, **caractérisé en ce que** le mécanisme de liaison du dossier (6) au plancher comprend, de chaque cote du dossier (6),
- une bielle arrière (12) reliée par une liaison pivot (110) sur le plancher (2) en un point situé en arrière de la cave et reliée par une liaison pivot (120) au dossier (6) sur sa partie proximale (6a), et
- un bras oscillant (13) relié par une liaison pivot (130) sur le plancher et reliée au dossier (6) par une liaison pivot (140) située sur sa partie proximale (6a) à distance de la liaison pivot (120) de la bielle arrière sur le dossier (6) en direction de la partie distale (6b) du dossier (6).

3. Siège selon la revendication 1 ou la revendication 2, **caractérisé en ce que** les moyens de liaison déconnectables comprennent au moins un crochet (35) fixé sur la partie avant du siège en forme générale de C ouvert en direction de l'avant du siège et un tube supérieur (33) positionné à l'extrémité supérieure du pied avant (15), le tube supérieur (33) s'engageant dans chacun des crochets (35) en position déployée du siège et se dégageant du siège en position escamotée du siège.

4. Siège selon la revendication 3, **caractérisé en ce que** chaque crochet (35) présente deux rampes (36) orientées de manière convergente vers une cavité (37) dans laquelle le tube supérieur (33) est engagé lorsque le siège est en position déployée.

5. Siège selon la revendication 4, **caractérisé en ce que** les deux rampes (36) de chaque crochet (35) convergent vers la cavité centrale au niveau d'un étranglement (38) qui obture partiellement la cavité (37) et le tube supérieur présente un méplat (39) pouvant être passé au travers de l'étranglement (38) au cours de l'escamotage du siège et au cours du déploiement du siège.

6. Siège selon l'une des revendications 3 à 5, **caractérisé en ce que** le siège comprend une ferrure (41) équipée d'une pince de clipsage qui vient se fixer sur le tube supérieur (33) du pied avant (15) et dotée d'une lumière allongée (42) dans laquelle est engagé un doigt (43) embarqué sur l'assise (7).

7. Siège selon l'une des revendications 1 à 6, **caractérisé en ce que** le siège comprend rampe (43) ascendante en direction de l'avant du siège sur laquelle la partie avant de l'assise (7) s'appuie durant l'escamotage et le déploiement du siège.

8. Siège selon la revendication 7, **caractérisé en ce que** la rampe (43) est constituée d'un fil métallique.

9. Siège selon la revendication 8, **caractérisé en ce que** la partie avant de l'assise (7) est pourvue d'un galet (44) ou d'un patin (42) susceptible de glisser sur la rampe (43).

10. Siège selon l'une des revendications 1 à 9 **caractérisé en ce que** le dossier (6) est équipé de deux flasques (21) en forme de crosse présentant une console (9) en direction de l'assise (7) sur lesquelles l'assise (7) est articulée.

11. Siège selon l'une des revendications 1 à 10, **caractérisé en ce qu'**il possède un mécanisme de verrouillage du siège en position déployé et un mécanisme de verrouillage du siège en position escamotée.

12. Siège selon la revendication 11, **caractérisé en ce qu'**un premier crochet mobile (45) est disposé sur l'un des flasques (21) et est susceptible de venir s'engager sur un pion fixé sur le bras oscillant (13) en position déployée du siège de manière à autoriser ou à empêcher la rotation du dossier (6) par rapport au bras oscillant (13).

13. Siège selon la revendication 11 ou la revendication 12, **caractérisé en ce qu'**un second crochet mobile (46) est disposé sur l'un des flasques (21) et est susceptible de venir s'engager sur un pion fixé sur le bras oscillant (13) en position escamoté du siège de manière à autoriser ou à empêcher la rotation du dossier (6) par rapport au bras oscillant.

14. Siège selon la revendication 13, **caractérisé en ce que** le premier crochet (45) et le second crochet (46) sont disposés sur un même flasque (13) et s'engagent successivement en position déployée et en position escamotée sur un même pion (47).

15. Ensemble comprenant au moins un siège selon l'une des revendications 1 à 14, **caractérisé en ce que** l'ensemble présente un bâti sensiblement quadrangulaire comprenant des poutres transversales et des poutres longitudinales entre lesquelles au moins un siège est positionné.

16. Ensemble selon la revendication 15, **caractérisé en ce que** le bâti présente une gouttière centrale en U sur laquelle viennent se fixer en pivot les bielles arrière, les bras oscillant et les pieds avant de deux sièges adjacents.

## Claims

1. A retractable seat capable of adopting an unfolded position and a position retracted into a stowage space formed in a floor (2) of a motor vehicle, one bottom wall (4) of which is located under the floor level (2), the seat comprising:
- a seating surface (7) having a front part (7a) and a rear part (7b) linked to the floor by a linking mechanism comprising a front foot (15) linked by a pivoting link (150) on the front part (7a) of the seating surface,
- a backrest (6) having a proximal part (6a) adjacent in the unfolded position to the rear part of the seating surface (7), and a distal part (6b) capable of receiving a headrest; the backrest (6) being linked to the floor by a linking mechanism,
**characterized in that** the proximal part (6a) of the backrest (6) includes two brackets (9) on which the seating surface (7) is pivotingly connected with a rotational axis offset Δ of the backrest (6) over the seating surface (7) towards the front part of the seating surface (7), in the unfolded position of the seat, and **in that** the front part of the seating surface (7) is connected to the front foot (15) by linking means, which can be disconnected, capable of ensuring support of the seating surface (7) in the operating position, and which are disconnected from the front part of the seating surface (7) when the seat is retracted and connected to the front part of the seating surface (7) when the seat is unfolded.

2. The seat according to claim 1, **characterized in that** the mechanism for linking the backrest (6) to the floor comprises on either side of the backrest (6),
- a rear connecting rod (12) linked by a pivoting link (110) on the floor (2) at a location situated behind the stowage space and linked by a pivoting link (120) to the backrest (6) on the proximal part (6a) thereof, and
- a swing arm (13) linked by a pivoting link (130) on the floor and linked to the backrest (6) by a pivoting link (140) located on the proximal part (6a) thereof remote from the pivoting link (120) of the rear connecting rod on the backrest (6) towards the distal part (6b) of the backrest (6).

3. The seat according to claim 1 or claim 2, **characterized in that** the linking means, which can be disconnected, comprise at least one hook (35) fastened on the front part of the seat having a general C-shape open towards the front of the seat and an upper tube (33) positioned at the upper end of the front foot (15), the upper tube (33) engaging into each of the hooks (35) in the unfolded position of the seat and disengaging from the seat in the retracted position of the seat.

4. The seat according to claim 3, **characterized in that** each hook (35) has two ramps (36) convergingly oriented towards a cavity (37), in which the upper tube (33) is engaged when the seat is in the unfolded position.

5. The seat according to claim 4, **characterized in that** both ramps (36) of each hook (35) converge towards the center cavity at a necking (38) partially sealing the cavity (37), and the upper tube has a flat (39) capable of going through the necking (38) while the seat is being retracted and while the seat is being unfolded.

6. The seat according to any of claims 3 to 5, **characterized in that** the seat comprises a fitting (41) provided with a holding clamp, which is fastened on the upper tube (33) of the front foot (15) and provided with an elongated lumen (42) into which engages a cog (43) carried on the seating surface (7).

7. The seat according to any of claims 1 to 6, **characterized in that** the seat comprises a ramp (43) rising in the direction of the front of the seat on which the front part of the seating surface (7) is resting while the seat is being retracted and unfolded.

8. The seat according to claim 7, **characterized in that** the ramp (43) is composed of wire.

9. The seat according to claim 8, **characterized in that** the front part of the seating surface (7) is provided with a roller (44) or a shoe (42) capable of sliding on the ramp (43).

10. The seat according to any of claims 1 to 9, **characterized in that** the backrest (6) is fitted with two flanges (21) shaped as scrolls having a bracket (9) in the direction of the seating surface (7) on which the seating surface (7) is hinged.

11. The seating surface according to any of claims 1 to 10, **characterized in that** it comprises a mechanism for locking the seat in the unfolded position and a mechanism for locking the seat in the retracted position.

12. The seat according to claim 11, **characterized in that** a first mobile hook (45) is arranged on one of the flanges (21) and is capable of engaging on a pin fixed on the swing arm (13) in the unfolded position of the seat so as to allow or prevent rotation of the backrest (6) with respect to the swing arm (13).

13. The seat according to claim 11 or claim 12, **characterized in that** a second mobile hook (46) is arranged on one of the flanges (21) and is capable of engaging on a pin fixed on the swing arm (13) in the retracted position of the seat so as to allow or prevent rotation of the backrest (6) with respect to the swing arm.

14. The seat according to claim 13, **characterized in that** the first hook (45) and the second hook (46) are arranged on the same flange (13) and successively engage in the unfolded position and in the retracted position on a same pin (47).

15. An arrangement, comprising at least one seat according to any of claims 1 to 14, **characterized in that** the arrangement has a substantially quadrangular frame comprising crossbeams and longitudinal beams, between which at least one seat is positioned.

16. The arrangement according to claim 15, **characterized in that** the frame has a U-shaped center gutter on which the rear connecting rods, the swing arms, and the front feet of two adjacent seats are pivotingly fastened.

## Patentansprüche

1. Versenkbarer Sitz, der eine ausgeklappte Position und eine Position, die in einen Stauraum versenkt ist, der in einem Fußboden (2) eines Kraftfahrzeugs gebildet ist und dessen Bodenwand (4) sich unter dem Niveau des Fußbodens (2) befindet, einnehmen kann, wobei der Sitz folgendes umfasst:
- eine Sitzfläche (7), die einen vorderen Teil (7a) und einen hinteren Teil (7b) aufweist, die mit dem Fußboden über einen Verbindungsmechanismus verbunden sind, der einen Vorderfuß (15) umfasst, der über eine Schwenkverbindung (150) auf dem vorderen Teil (7a) der Sitzfläche verbunden ist,
- eine Rückenlehne (6), die einen proximalen Teil (6a), der in der ausgeklappten Position an den hinteren Teil der Sitzfläche (7) grenzt, und einen distalen Teil (6b), der eine Kopfstütze aufnehmen kann, aufweist; wobei die Rückenlehne (6) mit dem Fußboden durch einen Verbindungsmechanismus verbunden ist,
**dadurch gekennzeichnet, dass** der proximale Teil (6a) der Rückenlehne (6) zwei Träger (9) umfasst, auf denen die Sitzfläche (7) drehbar angeschlossen wird mit einem Versatz der Drehachse Δ der Rückenlehne (6) auf der Sitzfläche (7) in Richtung auf den vorderen Teil der Sitzfläche (7), in der ausgeklappten Position des Sitzes; und dass der vordere Teil der Sitzfläche (7) an den vorderen Fuß (15) durch lösbare Verbindungsmittel angeschlossen ist, die es ermöglichen, eine Abstützung der Sitzfläche (7) in der Gebrauchsposition sicherzustellen, und die sich beim Versenken des Sitzes von dem vorderen Teil der Sitzfläche (7) lösen und sich beim Ausklappen des Sitzes an den vorderen Teil der Sitzfläche (7) anschließen.

2. Sitz nach Anspruch 1, **dadurch gekennzeichnet, dass** der Mechanismus zum Verbinden der Rückenlehne (6) mit dem Fußboden auf beiden Seiten der Rückenlehne (6) folgendes umfasst,
- eine hintere Zugstange (12), die durch eine Drehverbindung (110) auf dem Fußboden (2) an einer Stelle verbunden ist, die sich hinter dem Stauraum befindet, und über eine Drehverbindung (120) mit der Rückenlehne (6) an ihrem proximalen Teil (6a) verbunden ist, und
- einen Schwingarm (13), der über eine Drehverbindung (130) auf dem Fußboden verbunden ist und mit der Rückenlehne (6) über eine Drehverbindung (140) verbunden ist, die sich auf ihrem proximalen Teil (6a) von der Drehverbindung (120) der hinteren Zugstange entfernt auf der Rückenlehne (6) in Richtung des distalen Teils (6b) der Rückenlehne (6) befindet.

3. Sitz nach Anspruch 1 oder 2, **dadurch gekennzeichnet, dass** die lösbaren Verbindungsmittel mindestens einen Haken (35) umfassen, der auf dem vorderen Teil des Sitzes befestigt ist, mit einer allgemeinen C-Form, die in Richtung auf den vorderen Teil des Sitzes offen ist, und eine obere Röhre (33), die an dem oberen Ende des vorderen Fußes (15) angeordnet ist, wobei die obere Röhre (33) in der ausgeklappten Position des Sitzes in jeden der Haken (35) einrastet und in der versenkten Position des Sitzes aus dem Sitz ausrastet.

4. Sitz nach Anspruch 3, **dadurch gekennzeichnet, dass** jeder Haken (35) zwei Rampen (36) aufweist, die auf einen Hohlraum (37) hin zusammenlaufend ausgerichtet sind, in dem die obere Röhre (33) eingerastet ist, wenn der Sitz sich in der ausgeklappten Position befindet.

5. Sitz nach Anspruch 4, **dadurch gekennzeichnet, dass** die beiden Rampen (36) jedes Hakens (35) auf den mittleren Hohlraum an einer Einschnürung (38) zulaufen, die den Hohlraum (37) teilweise verschließt, und die obere Röhre eine Abflachung (39) aufweist, die während des Versenkens des Sitzes und während des Ausklappens des Sitzes durch die Einschnürung (38) hindurch geführt werden kann.

6. Sitz nach einem der Ansprüche 3 bis 5, **dadurch gekennzeichnet, dass** der Sitz einen Beschlag (41) umfasst, der mit einer Halteklemme ausgestattet ist, die auf der oberen Röhre (33) des vorderen Fußes (15) befestigt wird und mit einem länglichen Schlitz (42) versehen ist, in den ein Stift (43) einrastet, der von der Sitzfläche (7) getragen wird.

7. Sitz nach einem der Ansprüche 1 bis 6, **dadurch gekennzeichnet, dass** der Sitz eine Rampe (43) umfasst, die in Richtung auf den vorderen Teil des Sitzes ansteigt und auf der sich der vordere Teil der Sitzfläche (7) abstützt, während der Sitz versenkt und ausgeklappt wird.

8. Sitz nach Anspruch 7, **dadurch gekennzeichnet, dass** die Rampe (43) aus Draht besteht.

9. Sitz nach Anspruch 8, **dadurch gekennzeichnet, dass** der vordere Teil der Sitzfläche (7) mit einer Rolle (44) oder einem Gleitschuh (42) versehen ist, die bzw. der auf der Rampe (43) gleiten kann.

10. Sitz nach einem der Ansprüche 1 bis 9, **dadurch gekennzeichnet, dass** die Rückenlehne (6) mit zwei Flanschen (21) ausgestattet ist, die als Kreuzköpfe geformt sind, die einen Träger (9) in Richtung der Sitzfläche (7) aufweisen und an denen die Sitzfläche (7) angelenkt ist.

11. Sitz nach einem der Ansprüche 1 bis 10, **dadurch gekennzeichnet, dass** er einen Mechanismus zum Verriegeln des Sitzes in der ausgeklappten Position und einen Mechanismus zum Verriegeln des Sitzes in der versenkten Position besitzt.

12. Sitz nach Anspruch 11, **dadurch gekennzeichnet, dass** ein erster beweglicher Haken (45) auf einem der Flansche (21) angeordnet ist und auf einem Zapfen einrasten kann, der auf dem Schwingarm (13) befestigt ist, in der ausgeklappten Position des Sitzes, um eine Drehung der Rückenlehne (6) im Verhältnis zum Schwingarm (13) zu erlauben oder zu verhindern.

13. Sitz nach Anspruch 11 oder 12, **dadurch gekennzeichnet, dass** ein zweiter beweglicher Haken (46) auf einem der Flansche (21) angeordnet ist und in der Lage ist, auf einem Zapfen, der auf dem Schwingarm (13) befestigt ist, in der versenkten Position des Sitzes einzurasten, um eine Drehung der Rückenlehne (6) im Verhältnis zum Schwingarm zu erlauben oder zu verhindern.

14. Sitz nach Anspruch 13, **dadurch gekennzeichnet, dass** der erste Haken (45) und der zweite Haken (46) auf demselben Flansch (13) angeordnet sind und nacheinander in der ausgeklappten Position und in der versenkten Position auf demselben Zapfen (47) einrasten.

15. Anordnung, umfassend mindestens einen Sitz nach einem der Ansprüche 1 bis 14, **dadurch gekennzeichnet, dass** die Anordnung ein im Wesentlichen viereckiges Gestell aufweist, das Querstreben und Längsstreben umfasst, zwischen denen mindestens ein Sitz angeordnet ist.

16. Anordnung nach Anspruch 15, **dadurch gekennzeichnet, dass** das Gestell eine U-förmige Mittelrinne aufweist, an der die hinteren Zugstangen, die Schwingarme und die vorderen Füße von zwei angrenzenden Sitzen befestigt werden.
